# EUROPÄISCHE PATENTSCHRIFT

(11) **EP 1 328 556 B1**
(45) Veröffentlichungstag und Bekanntmachung des Hinweises auf die Patenterteilung: **29.04.2009**
(21) Anmeldenummer: 01982423.4
(22) Anmeldetag: 10.10.2001
(51) Int. Cl.: C08F 2/44, C08G 85/00

(54) **VERFAHREN ZUR ZUGABE VON ANORGANISCHEN ADDITIVEN ZU POLYMERROHSTOFFEN VOR DER POLYMERBILDUNG**
METHOD FOR ADDING INORGANIC ADDITIVES TO POLYMER RAW MATERIAL BEFORE POLYMER FORMATION
PROCEDE POUR AJOUTER DES ADDITIFS INORGANIQUES A DES MATIERES PREMIERES POLYMERES AVANT LA FORMATION DE POLYMERE

(30) Priorität: 13.10.2000 DE 10050961
(43) Veröffentlichungstag der Anmeldung: 23.07.2003
(73) Patentinhaber: Sachtleben Chemie GmbH, 47198 Duisburg (DE)
(72) Erfinder: MEYERS, Franz, Charlotte, NC 28277 (US); KASTNER, Jürgen, 44803 Bochum (DE); WEDLER, Michael, 47119 Duisburg (DE); WEISER, Peter, 47179 Duisburg (DE)
(74) Vertreter: Uppena, Franz
(86) Internationale Anmeldenummer: PCT/EP2001/011739
(87) Internationale Veröffentlichungsnummer: WO 2002/030994

(56) Entgegenhaltungen:
- WO-A-94/18270
- DE-A- 1 570 933

## Beschreibung

Die Erfindung betrifft ein Verfahren zur Zugabe von anorganischen Additiven zu Polymerrohstoffen vor der Polymerbildung.

Zur Modifizierung von Polymeren, insbesondere sind hier Polyester, Polyamid 6 und Polyamid 6.6 zu nennen, werden unterschiedliche funktionelle anorganische Additive eingesetzt. Durch diese Additive können die entsprechenden Polymere in Bezug auf Verarbeitungs-, optische und anwendungstechnische Eigenschaften verändert werden. In der Synthesefaserindustrie werden z.B. Mattierungsmittel verwendet, um den vor allem für die textilen Fasern unerwünschten speckigen Glanz und die Transparenz der Polymere zu-vermeiden. Eingesetzt werden hierzu Mikrokristalle aus Titandioxid TiO₂ oder Zinksulfid ZnS. Der Einsatz dieser Mikrokristalle erzeugt zudem eine Oberflächenstruktur auf den Synthesefasern, die die Verarbeitungseigenschaften bzgl. der Friktion des Fadens an Fadenführungselementen und des Fadenlaufs während der Verspinnung und Verstreckung positiv beeinflussen. Zu diesem Zweck können aber auch Mikrokristalle aus nachbehandeltem Bariumsulfat BaSO₄ verwendet werden, die gegenüber TiO₂ und ZnS aber nicht zur Mattierung der Polymeren führen. Ein anderes Beispiel ist der Einsatz von Nanokristallen aus Titandioxid, um Polymere mit UV-schützenden Eigenschaften herzustellen.

Damit die mit den einzelnen Additiven er-zielbären gewünschten Effekte deutlich werden können, ist der Technologie der Zugabe der Additive zum Polymer besondere Bedeutung zuzumessen. Prinzipiell gibt es hier drei Zugabemöglichkeiten:
1. Zugabe der Additive zu den Rohstoffen für die Polymerherstellung, d.h. vor der eigentlichen Polymerbildung
2. Zugabe der Additive während des Polymerbildungsprozesses
3. Zugabe der Additive zur fertigen Polymerschmelze, d.h. nach Beendigung des Kettenwachstums

Nach dem Stand der Technik erfolgt die Zugabe der anorganischen Additive zur Modifizierung von Polymeren fast ausschließlich nach den Zugabemöglichkeiten 2 und 3 (Ausnahme: Katalysatoren für die Polymerbildung). Zum Beispiel erfolgt bei der Herstellung von Synthesefasern die Zugabe der TiO₂-Pigmente/Mikrokristalle in den Prozess in Form einer wässrigen oder organischen Suspension (Slurry) in einem frühen Stadium vor der Polymerisationsreaktion (Zugabemöglichkeit 2). Auch BaSO₄-Additive oder Nanokristalle von TiO₂ werden auf diesem Wege in ein Polymer eingetragen

Die Zugabemöglichkeit 2 (Zugabe einer Additiv-Suspension während des Polymerbildungsprozesses) ergab bisher in vielen Fällen die besten Polymerqualitäten in Bezug auf Weiterverarbeitbarkeit und sonstige Eigenschaften der hergestellten Polymere. Der Polymerhersteller muss aber einen erheblichen technischen und personellen Aufwand betreiben, um die Additiv-Suspensionen für den Einsatz vorzubereiten. Dazu zählen die Schritte Dispergierung der Additiv-Partikel im Suspensionsmedium, Abtrennung der Grobkomfraktionen und Vermeidung von Reflockulation in der Suspension. Zudem ist darauf zu achten, dass es bei der Zugabe der vorbereiteten Suspension in den Massestrom nicht zu Flockulationseffekten kommt, die durch Wechselwirkungen mit anderen Additiven oder durch Temperatureinflüsse (kalte Suspension < 50 °C wird in heißen Massestrom > 200 °C gegeben) auftreten können.

Die Möglichkeit 3 (Zugabe der Additive zur fertigen Polymerschmelze, auch Schmelzemodifizierungsverfahren oder Schmelzemattierungsverfahren genannt) ist z.B. in der DE 4039857 C2 beschrieben. Das Schmelzemodifizierungsverfahren weist jedoch folgende Nachteile auf:

Die Additive (anorganische Feststoffteilchen) werden als Pulver in die fertige Polymerschmelze eingearbeitet. Zur Einstellung des gewünschten Feststoffgehaltes im Polymer ist vor allem eine gleichmäßige Pulverdosierung notwendig.

Voraussetzung dafür ist eine gute bis sehr gute Fließfähigkeit der Pulver. Die eingesetzten Pulver auf Basis von TiO₂, BaSO₄ und ZnS zeigen alle schlechte Fließfähigkeiten und können im Pulverzuführungssystem zu unerwünschter Brücken-und Schachtbildung führen. Es wurde gefunden (Messungen mit einem Ringschergerät), dass diese Pulver als sehr kohäsiv bis nicht fließend einzustufen sind. Deshalb ist bei der Dosierung dieser Pulver mit erheblichen Dosierschwankungen zur rechnen, die aufgrund der damit verbundenen Feststoffkonzentrationsabweichungen zu beträchtlichen Mengen nicht spezifikationsgerechten Produktes führen würden.

Damit die Eigenschaften der Additive im Polymer voll zur Geltung kommen können, ist eine sehr gute und gleichmäßige Verteilung der einzelnen Partikel im Polymer erforderlich. Die Dispergierung der Pulver bei den verschiedenen Schmelzemodifizierungsverfahren und bei der Herstellung von Masterbatchen erfolgt in speziell ausgelegten Extrudern. Die Dispergierbarkeit der eingesetzten Pulver muss so gut sein, dass die Scherkräfte in diesen Extrudern ausreichen um die erforderliche Partikelgrößenverteilung im Polymeren zu erzielen. Die nach dem Stand der Technik eingesetzten Pulver auf Basis von TiO₂, BaSO₄ und ZnS liegen in der Lieferform in agglomerierte Form vor, d.h. es müssen starke Scherkräfte aufgewendet werden, um diese Agglomerate zu zerschlagen und optimal zu verteilen. Gegenüber der konventionellen Additivzugabe über Additiv-Suspensionen während des Polymerbildungsprozesses (Zugabemöglichkeit 2) ergeben die beschriebenen Schmelzemodifizierungsverfahren in Bezug auf Partikelverteilung qualitativ schlechtere Polymerprodukte, weil die Scherkräfte zur Dispergierung der Additiv-Suspensionen durch geeignete Wahl der Dispergiermaschinen höher sind als in Extrudern oder Knetern.

Bei der Weiterverarbeitung der hergestellten Polymere spielt der Anteil an zu groben Additivpartikeln, eine qualitätsrelevante Rolle. Diese Partikel führen z.B. bei der Herstellung von Synthesefasern durch Verspinnung und Verstreckung zu einer erhöhten Anzahl an unerwünschten Fadenbrüchen. Gleichzeitig wird auch die Standzeit von Polymerfiltern und Spinpack-Filtern herabgesetzt. Bei der Herstellung von Additiv-Suspensionen für die Zugabe während des Polymerbildungsprozesses (Zugabemöglichkeit 2) lassen sich diese durch Dispergierung nicht zerschlagenen Grobpartikel durch Zentrifugation, Sedimentation und/oder Filtration aus der niedrigviskosen Suspension entfernen. Nach der Dispergierung im Extruder (Zugabemöglichkeit 3) lassen sich die noch verbleibenen Grobpartikel nicht mehr abtrennen, da in diesen hochviskosen Polymerschmelzen die erforderlichen Filterfeinheiten nicht erreicht werden können. Das heißt, die nach dem Stand der Technik eingesetzten Pulver auf Basis von TiO₂, BaSO₄ und ZnS haben auch nach der Dispergierung im Extruder einen unerwünschten Grobanteil, der die Qualität der Polymerendprodukte negativ beeinflusst.

Aufgrund dieser Nachteile hat sich das Schmelzemodifizierungsverfahren in der Praxis bisher kaum durchsetzen können.

Die Zugabe von Additiv-Suspensionen zu den Polymerrohstoffen bzw. zu deren Zubereitungen (Zugabemögüchkeit 1) hat gegenüber der Zugabemöglichkeit 2 erhebliche Nachteile in Bezug auf Verteilunsgrad der Additive im späteren Polymer. Viele der genannten anorganischen Additive - insbesonders TiO₂ - haben im sauren Bereich nur eine geringe Stabilität gegen Flockulation. Da bei der Herstellung von Polyester und Polyamid die Rohstoffe bzw. anfängliche Zwischenprodukte noch eine erhebliche Anzahl an freien Säuregruppen enthalten, kommt es bei dieser Zugabemöglichkeit zu unerwünschten Reagglomerationen. Das heißt, die gute Dispergierung der Partikel in der Suspension kann nicht ins Polymere hinein beibehalten werden. Aus diesem Grunde hat sich die Zugabe von Additiv-Suspensionen zu den Polymerrohstoffen bzw. zu deren Zubereitungen in der Praxis nicht durchgesetzt.

Die Zugabe von Pulvern auf Basis von TiO₂ oder BaSO₄ zu den Rohstoffen bzw. deren Zubereitungen (ebenfalls Zugabemöglichkeit 1) führt nicht zu den gewünschten Polymerqualitäten und -eigenschaften, da die Scherkräfte, die während des anschließenden Polymerherstellprozesses wirken, nicht ausreichen, um die Agglomerate und Flockulate, die zwangsläufig in den zugesetzten Pulvern vorkommen, im Massestrom zu dispergieren und homogen im Polymer zu verteilen. Diese Verfahrensvariante ist deshalb ebenfalls nicht praktikabel.

Aufgabe der Erfindung ist es, die Nachteile des Standes der Technik zu beseitigen und insbesondere ein Verfahren zur Modifizierung von Polymeren durch feinteilige anorganische Feststoffteilchen zu schaffen, das eine ausreichend genaue Dosierung der zuzugebenden Additive erlaubt und das eine homogene Verteilung der Additive ohne unerwünschten Grobanteil im erhaltenen Polymer gewährleistet, ohne dass die Additive vom Polymerhersteller in besonderer Weise vorbereitet werden müssen.

Gelöst wird die Aufgabe durch ein Verfahren zur Zugabe von anorganischen Additiven zu Polymerrohstoffen vor der Polymerbildung
bei dem ein pulverförmiges Additiv,
welches die anorganischen Feststoffteilchen mit einer maximalen Korngröße von 1 µm feinverteilt in einer Matrix aus einer organischen Substanz eingebettet enthält, wobei die organische Substanz einen oder mehrere der Stoffe Polyole, Polyglycole, Polyether, Dicarbonsäuren und deren Derivate, AH-Salz (Nylonsalz, aus Adipinsäure und Hexamethylendiamin), Caprolactam, Paraffine, Phosphorsäureester, Hydroxycarbonsäureester und Cellulose enthält,
zu den Rohstoffen, aus denen das Polymer hergestellt wird, zugegeben wird (Zugabemöglichkeit 1).

Die Herstellung der pulverförmigen Additive (Präparationsmittel, Mattierungsadditive) ist in der WO 00/14165 oder auch in der WO- 00/-14153 beschrieben. Die Präparationsmittel (Mattierungsadditive, pulverförmige Additive) für die Weiterverarbeitung in synthetischen Polymeren, bestehend aus feinteiligen anorganischen Festkörpern, ausgewählt aus Pigmenten und/oder Füllstoffen, sind in einem Trägermäterial, ausgewählt aus wenigstens einer der organischen Substanzen Polyole, Polyglycole, Polyether, Dicarbonsäuren und deren Derivate, AH-Salz, Caprolactam, Paraffine, Phosphorsäureester, Hydroxycarbonsäureester und Cellulose feinverteilt eingebettet. Feinverteilt heißt, dass die Feststoffteilchen in nicht agglomerierter Form in einer organischen Matrix vorliegen. Zur Herstellung dieser pulverförmigen Additive werden in einer wässrigen Vormischung, welche die organische Substanz in einer solchen Menge enthält, dass der Anteil der organischen Substanz 0,2 bis 50 Gew.-% (bezogen auf den anorganischen Festkörper-Gehalt des fertigen pulverförmigen Additivs) beträgt, 20 bis 60 Gew.-% (bezogen auf den Gesamtansatz der wässrigen Vormischung) der anorganischen Festkörper dispergiert, dann wird die Dispersion auf eine mittlere Korngröße d₅₀ von 0,2 bis 0,5 µm nassgemahlen, der Überkornanteil von > 1 µm aus der Suspension entfernt und die Suspension getrocknet. Die erhaltenen pulverförmigen Additive haben eine mittlere Partikelgröße von bis zu 100 µm.

Es wurde gefunden, dass sich diese pulverförmigen Additive aufgrund ihrer sehr guten Fließfähigkeit (im Gegensatz zu bisher zur Verfügung stehenden feingemahlenen Pulvern) entsprechend gut dosieren lassen.

Da die anorganischen Feststoffteilchen in der für die späteren Anwendung geeigneten Partikelgröße (z.B. 0,3 µm TiO₂ Mikrokristalle für die Mattierung von Synthesefasern) in den pulverförmigen Additiven in der organische Matrix feinverteilt und in nichtagglomerierter Form eingebettet sind, müssen sie nur noch durch Schmelzen/Auflösen der organischen Matrix unter Einsatz von schwachen Scherkräften im Massestrom freigesetzt und homogen verteilt werden. Die entsprechenden Pulver können vom Polymerhersteller ohne spezielle Vorbereitung in der Polymerherstellung verwendet werden, ohne dass es zu Qualitätseinbußen gegenüber einem Verfahren nach dem Stand der Technik (Zugabemöglichkeit 2) kommt. Praktisch bedeutet dies, dass durch die feinere Verteilung der Additive deren Leistungsoptimum (Mattierungsgrad, UV-Schutz usw.) schon bei einer im Vergleich zum Stand der Technik niedrigeren Einsatzmenge erreicht wird.

Konkret kann die Zugabe der pulverförmigen Additive wie folgt vorgenommen werden:

Für Polyester (Polyethylenterephthalat (PET), Polybutylenterephthalat (PBT), Polytrimethylenterephthalat (PTT)):

Zugabe als Pulver zur Paste, bestehend aus Terephthalsäure (PTA), Diolkomponente (Ethylenglykol, 1,4-Butandiol oder 1,3-Propandiol) und schon veresterten Zwischenprodukten (PTA-Verfahren).

Zugabe als Pulver in den Aufschmelzbehälter, in dem Dimethylterephthalat (DMT) für des DMT-Verfahren aufgeschmolzen wird.

Für Polyamid (PA):

Zugabe als Pulver zur AH-Salz-Lösung (adipinsaures Hexamethylendiamin oder Hexamethylenammoniumadipat) zur Herstellung von PA 6.6.

Zugabe als Pulver in den Aufschmelzbehälter, in dem Caprolactam für die Herstellung von PA 6, aufgeschmolzen wird.

Durch die spezielle Ausgestaltung der erfindungsgemäß verwendeten Additive (Einbettung in eine polymerverträgliche organische Matrix) werden die für die angestrebten Polymereigenschaften wichtigen Feststoffteilchen nach und nach freigesetzt, so dass die Flockulationsneigung im System minimiert werden kann. Da die Zugabe der Pulver ohne Temperaturdifferenz zum Rohstoffsystem erfolgen kann, wird die Flockulationsneigung zusätzlich unterdrückt.

Bevorzugt enthalten die anorganischen Feststoffteilchen TiO₂, und/oder BaSO₄, wobei die Feststoffteilchen auch nachbehandeln sein können.

Bevorzugt enthält die organische Substanz Antioxidantien (z.B. Butylhydroxyanisol oder Hydroxyanisol) in einer Menge von bis zu 0,5 Gew.% (bezogen auf die Menge organische Substanz). Die organische Substanz kann weitere übliche Hilfs- und Zusatzstoffe enthalten. Bevorzugt enthält die organische Substanz mindestens 98 Gew.-% Polyethylenglycol oder AH-Salz oder Caprolactam, besonders bevorzugt besteht die organische Substanz aus Polyethylenglycol, oder AH-Salz oder Caprolactam und bis zu 0,5 Gew.-% eines Antioxidans.

Als Polymer wird bevorzugt Polyester oder Polyamid 6 oder Polyamid 6.6 verwendet.

Folgende pulverförmigen Additivzusammensetzungen werden für das erfindungsgemäße Verfahren bevorzugt verwendet:

| Feststoff | Gew.-% | Organische Substanz | Gew.-% | Einsatz für Herstellung von |
|---|---|---|---|---|
| TiO₂ | 50-99,8 | Polyethylenglykol | 0,2-50 | Polyester |
| TiO₂ | 50-99,8 | Caprolactam | 0,2-50 | Polyamid |
| BaSO₄ | 50-99,8 | Polyethylenglykol | 0,2-50 | Polyester |
| BaSO₄ | 50-99,8 | Caprolactam | 0,2-50 | Polyamid |

Besonders bevorzugt sind pulverförmige Additive mit 75 bis 85 Gew-% anorganischem Feststoff und 15 bis 25 Gew.-% organischer Substanz. Eine bevorzugte mittlere Korngröße d₅₀ des anorganischen Feststoffes, der in die organische Substanz eingebettet ist, beträgt 0,25 bis 0,45 µm.

Aus einem anorganische Feststoffteilchen enthaltenden Polyester, bzw. Polyamid, welcher, bzw. welches unter erfindungsgemäßer Verwendung der pulverförmigen Additive hergestellt wurde, lassen sich Polyersterfasern und Polyesterfilme, bzw. Polyamidfasern und Polyamidfilme herstellen, die ebenfalls die anorganischen Feststoffteilchen enthalten.

## Patentansprüche

1. Verfahren zur Zugabe von anorganischen Additiven zu Polymerrohstoffen vor der Polymerbildung, **dadurch gekennzeichnet, dass**
ein pulverförmiges Additiv,
welches die anorganischen Feststoffteilchen mit einer maximalen Korngröße von 1 µm feinverteilt in einer Matrix aus einer organischen Substanz eingebettet enthält
wobei die organische Substanz besteht aus einem oder mehreren der Stoffe Polyole, Polyglycole, Polyether, Dicarbonsäuren und deren Derivate, AH-Salz, Caprolactam, Paraffine, Phosphorsäureester, Hydroxycarbonsäureester und Cellulose,
zu den Rohstoffen, aus denen das Polymer hergestellt wird, zugegeben wird.

2. Verfahren nach Anspruch 1, **dadurch gekennzeichnet, dass** die anorganischen Feststoffteilchen enthalten TiO₂, und/oder BaSO₄, wobei die Feststoffteilchen auch nachbehandelt sein können.

3. Verfahren nach Anspruch 1 der 2, **dadurch gekennzeichnet, dass** die organische Substanz aus Polyethylenglycol oder AH-Salz oder Caprolactam und bis zu 0,5 Gew.-% eines Antioxidans besteht.

4. Verfahren nach einem der Ansprüche 1 bis 3, **dadurch gekennzeichnet, dass** als Polymer Polyester oder Polyamid 6 oder Polyamid 6.6 hergestellt wird.

5. Polymer, enthaltend anorganische Feststoffteilchen, **dadurch gekennzeichnet, dass** das Polymer hergestellt wird nach einem Verfahren gemäß einem oder mehreren der Ansprüche 1 bis 4.

6. Polyester, enthaltend anorganische Feststoffteilchen, **dadurch gekennzeichnet, dass** der Polyester hergestellt wird nach einem Verfahren gemäß einem oder mehrerer der Ansprüche 1 bis 4. ,

7. Polyesterfaser oder Polyesterfilm, enthaltend anorganische Feststoffteilchen, **dadurch gekennzeichnet, dass** die Polyesterfaser oder der Polyesterfilm hergestellt wird aus einem Polyester gemäß Anspruch 6.

8. Polyamid, enthaltend anorganische Feststoffteilchen, **dadurch gekennzeichnet, dass** das Polyamid hergestellt wird nach einem Verfahren gemäß einem oder mehrerer der Ansprüche 1 bis 4.

9. Polyamidfaser oder Polyesterfilm, enthaltend anorganische Feststoffteilchen, **dadurch gekennzeichnet, dass** die Polyamidfaser oder der Polyesterfilm hergestellt wird aus einem Polyamid gemäß Anspruch 8.

## Claims

1. Process for the addition of inorganic additives to polymer raw materials before formation of the polymer, **characterized in that**
a powdery additive
which contains the inorganic solid particles with a maximum particle size of 1 µm embedded in finely distributed form in a matrix of an organic substance,
the organic substance consisting of one or several substances from polyols, polyglycols, polyethers, dicarboxylic acids and derivatives thereof, AH salt, caprolactam, paraffins, phosphoric acid esters, hydroxycarboxylic acid esters and cellulose,
is added to the raw materials from which the polymer is prepared.

2. Process according to claim 1, **characterized in that** the inorganic solid particles contain TiO₂ and/or BaSO₄, it also being possible for the solid particles to be aftertreated.

3. Process according to claim 1 or 2, **characterized in that** the organic substance consists of polyethylene glycol or AH salt or caprolactam and up to 0.5 wt.% of an antioxidant.

4. Process according to one of claims 1 to 3, **characterized in that** polyester or polyamide 6 or polyamide 6.6 is prepared as the polymer.

5. Polymer containing inorganic solid particles, **characterized in that** the polymer is prepared by a process according to one or more of claims 1 to 4.

6. Polyester containing inorganic solid particles, **characterized in that** the polyester is prepared by a process according to one or more of claims 1 to 4.

7. Polyester fibre or polyester film containing inorganic solid particles, **characterized in that** the polyester fibre or the polyester film is produced from a polyester according to claim 6.

8. Polyamide containing inorganic solid particles, **characterized in that** the polyamide is prepared by a process according to one or more of claims 1 to 4.

9. Polyamide fibre or polyester film containing inorganic solid particles, **characterized in that** the polyamide fibre or the polyester film is produced from a polyamide according to claim 8.

## Revendications

1. Procédé d'addition d'adjuvants inorganiques à des matières premières de polymère avant la formation d'un polymère, **caractérisé en ce que** l'on ajoute
un adjuvant à l'état pulvérulent,
qui contient un matériau inorganique finement divisé en particules solides de 1 µm de taille maximale, enrobées dans une matrice en une matière organique,
laquelle matière organique consiste en une ou plusieurs des substances suivantes : polyols, polyglycols, polyéthers, acides dicarboxyliques et
leurs dérivés, sel d'acide adipique et de 1,6-hexanediamine, caprolactame, paraffines, esters d'acide phosphorique, esters d'acide hydroxy-carboxylique et cellulose,
à des matières premières à partir desquelles on veut préparer un polymère.

2. Procédé conforme à la revendication 1, **caractérisé en ce que** les particules solides de matériau inorganique contiennent du dioxyde de titane et/ou du sulfate de baryum, lesquelles particules solides peuvent aussi subir un traitement ultérieur.

3. Procédé conforme à la revendication 1 ou 2, **caractérisé en ce que** la matière organique consiste en un polyéthylèneglycol, ou du sel d'acide adipique et de 1,6-hexanediamine, ou du caprolactame, et contient jusqu'à 0,5 % en poids d'un anti-oxydant.

4. Procédé conforme à l'une des revendications 1 à 3, **caractérisé en ce que** le polymère préparé est un polyester, un polyamide 6 ou un polyamide 6-6.

5. Polymère contenant des particules solides de matériau inorganique, **caractérisé en ce que** ce polymère a été préparé selon un procédé conforme à l'une ou plusieurs des revendications 1 à 4.

6. Polyester contenant des particules solides de matériau inorganique, **caractérisé en ce que** ce polyester a été préparé selon un procédé conforme à l'une ou plusieurs des revendications 1 à 4.

7. Film en polyester ou fibres de polyester, contenant des particules solides de matériau inorganique, **caractérisé**(es) en ce que ce film en polyester ou ces fibres de polyester a (ont) été préparé(es) à partir d'un polyester conforme à la revendication 6.

8. Polyamide contenant des particules solides de matériau inorganique, **caractérisé en ce que** ce polyamide a été préparé selon un procédé conforme à l'une ou plusieurs des revendications 1 à 4.

9. Film en polyamide ou fibres de polyamide, contenant des particules solides de matériau inorganique, **caractérisé**(es) en ce que ce film en polyamide ou ces fibres de polyamide a (ont) été préparé(es) à partir d'un polyamide conforme à la revendication 8.
